# EUROPEAN PATENT SPECIFICATION

(11) **EP 2 562 196 B1**
(45) Date of publication and mention of the grant of the patent: **21.02.2018**
(21) Application number: 11772009.4
(22) Date of filing: 19.04.2011
(51) Int. Cl.: C08G 59/68, B32B 15/08, C08J 5/24, C08L 63/00

(54) **THERMOSETTING COMPOSITION**
WÄRMEHÄRTENDE ZUSAMMENSETZUNG
COMPOSITION THERMODURCISSABLE

(30) Priority: 21.04.2010 JP 2010097778
(43) Date of publication of application: 27.02.2013
(73) Proprietor: Mitsubishi Gas Chemical Company, Inc., Tokyo 100-8324 (JP)
(72) Inventor: MABUCHI Yoshinori, Tokyo 125-8601 (JP); SOGAME Masanobu, Tokyo 125-8601 (JP); ARII Kenji, Tokyo 125-8601 (JP); OHTSUKA Hajime, Tokyo 125-8601 (JP); FUKASAWA Emi, Tokyo 125-8601 (JP)
(74) Representative: Hoffmann Eitle
(86) International application number: PCT/JP2011/059627
(87) International publication number: WO 2011/132674

(56) References cited:
- JP-A- 2 286 723
- JP-A- 2000 063 496
- JP-A- 2000 239 496
- JP-A- 2003 253 018
- US-A1- 2002 058 778
- US-A1- 2006 093 824

## Description

### Technical Field

The present invention relates to a resin composition and more particularly relates to a resin composition for use, for example, in printed wiring board materials for electric circuit formation, a prepreg comprising the resin composition impregnated into or coated on a base material, and a laminated sheet obtained by curing the prepreg.

### Background of the Invention

Cyanate compound-containing cyanate resins and bismaleimide triazine resins (BT resins) containing a compound obtained by reacting a cyanate compound with a bismaleimide compound have long been known as heat curable resins that possess high heat resistance and excellent dielectric properties and the like. In recent years, these resins have been extensively used, for example, in highly functional printed wiring board materials for semiconductor plastic packages (for example, patent documents 1 and 2).

In the cyanate resins and BT resins, various catalysts have been added to Increase a curing speed and thus to improve the productivity. Imidazole compounds have been proposed as such catalysts (patent documents 3, 4, 5 and 6 and 7). The addition of imidazole compounds in the resins leads to the development of catalytic activity that can realize curing of resins at low temperatures In a short time in the step of drying after impregnation coating in the production of prepregs and further can realize lamination pressing of prepregs at low temperatures in a short time.

The addition of imidazole compounds in the resins, however, can contribute to improved productivity of prepregs and laminated sheets, but on the other hand, poses problems, for example, lowered storage stability of prepregs.

### PRIOR ART DOCUMENTS

### Patent documents

Patent document 1: Japanese Patent Application Laid-Open No. 2007-204697
Patent document 2: Japanese Patent Application Laid-Open No. 2008-88400
Patent document 3: Japanese Patent Application Laid-Open No. 2005-281513
Patent document 4: Japanese Patent No. 3821797
Patent document 5: Japanese Patent No. 3821728
Patent document 6: Japanese Patent Application Laid-Open No. 2003-253018
Patent document 7: US2006093824

### [SUMMARY OF THE INVENTION]

The present Inventors have now found that the addition of epoxy resins and specific imidazole compound to cyanate resins or BT resins can allow the step of drying after prepreg impregnation coating and lamination pressing to be carried out at low temperatures in a short time and, at the same time, can realize resin compositions that can maintain storage stability of prepregs. The present invention has been made based on such finding.

Accordingly, an object of the present invention is to provide a resin composition that can allow the step of drying after prepreg impregnation coating and lamination pressing to be carried out at low temperatures in a short time and, at the same time, can allow maintain storage stability of prepregs to be maintained.

According to the present invention, there is provided a resin composition comprising:
an Imidazole compound (A) represented by formula (I);
an epoxy compound (B); and
a cyanate compound (C1) which is contained in the resin composition in an amount of 10 to 75% by weight based on the total amount of the resin, if the resin composition contains cyanate compound (C1), or a BT resin (C2): 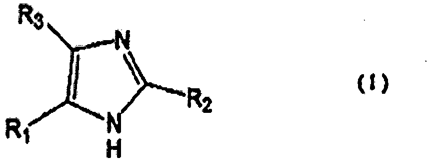
wherein
R<1> and R<2> each independently represent an alkyl group having 3 to 18 carbon atoms, an alkenyl group having 3 to 18 carbon atoms, an alkoxyl group having 3 to 18 carbon atoms, or a substituted or unsubstituted aromatic substituent having 6 to 14 carbon atoms;
R<3> represents an alkyl group having 1 to 18 carbon atoms, an alkenyl group having 2 to 18 carbon atoms, an alkoxy group having 1 to 18 carbon atoms, a substituted or unsubstituted aromatic substituent having 6 to 14 carbon atoms, or a halogen group.

The present invention can realize a resin composition that can allow the step of drying after prepreg impregnation coating and lamination pressing to be carried out at low temperatures in a short time and, at the same time, can allow maintain storage stability of prepregs to be maintained.

### [DETAILED DESCRIPTION OF THE INVENTION]

The resin composition according to the present invention comprises: a specific imidazole compound (A); an epoxy compound (B); and a cyanate compound (C1) which is contained in the resin composition in an amount of 10 to 75% by weight based on the total amount of the resin, if the resin composition contains cyanate compound (C1), or a BT resin (C2) as indispensable ingredients. Components constituting the resin composition according to the present invention will be described.

### <Imidazole compound (A)>

The resin composition according to the present invention comprises (A) an imidazole compound represented by formula (I):

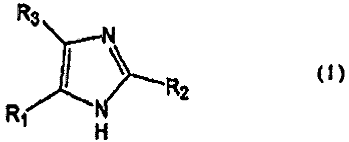

In formula (I), R<1> and R<2> each independently represent an alkyl group having 3 to 18 carbon atoms, an alkenyl group having 3 to 18 carbon atoms, an alkoxyl group having 3 to 18 carbon atoms, or a substituted or unsubstituted aromatic substituent having 6 to 14 carbon atoms. When at least one of the hydrogen atoms in the aromatic substituent is substituted by other substituent, such substituents include alkyl groups having 1 to 18 carbon atoms, alkenyl groups having 2 to 18 carbon atoms, alkoxyl groups having 1 to 18 carbon atoms, and halogens.

From the viewpoints of curing acceleration in a polymerisation reaction and storage stability of prepregs, preferably, R<1> and R<2> each independently represent an isopropyl, t-butyl, isopropylalkoxyl, t-butylalkoxyl, phenyl, or naphthyl group, Particularly preferably, both R<1> and R<2> represent a phenyl group.

In formula (I), R<3> represents an alkyl group having 1 to 18 carbon atoms, an alkenyl group having 2 to 18 carbon atoms, an alkoxy group having 1 to 18 carbon atoms, a substituted or unsubstituted aromatic substituent having 6 to 14 carbon atoms, or a halogen. When at least one of hydrogen atoms in the aromatic substituent is substitued by other substituent, such substituents include alkyl groups having 1 to 18 carbon atoms, alkenyl groups having 2 to 18 carbon atoms, alkoxyl groups having 1 to 18 carbon atoms, and halogen groups.

In the present invention, the addition of the specific imidazole compound (A) as a curing catalyst to the resin composition comprising the cyanate compound (C1) or the BT resin (C2) can simultaneously realize productivity and storage stability of cyanate compound-containing resins or BT resins possessing excellent heat resistance and hygroscopic heat resistance. The reason for this has not been elucidated yet but is believed to be as follows. Specifically, it is believed that the specific imidazole compound (A) containing a bulky substituent around a secondary amine which is a reaction active site In the imidazole compound exhibits a high molecular motion energy at elevated temperatures to develop a secondary amine-derived catalytic activity while, at low temperatures, the molecular motion energy is so low that the secondary amine-derived catalytic activity is suppressed, whereby the productivity (curing speed) and the storage stability can be simultaneously realized.

The content of the imidazole compound (A) in the total amount of the resin is preferably 0.1 to 10% by weight, more preferably 0.2 to 5% by weight, from the viewpoints of curing acceleration effect, storage stability, and moldability. The total amount of the resin refers to a total weight of the imidazole compound (A), the epoxy compound (B), and the cyanate compound (C1) or the BT resin (C2).

The resin composition according to the present invention may comprise other conventional curing accelerators in addition to the imidazole compound (A). Such curing accelerators include, for example, organic peroxides exemplified by benzoyl peroxide, lauroyl peroxide, acetyl peroxide, p-chlorobenzoyl peroxide, di-tert-butyl-di-perphthalate and the like, azo compounds such as azobisnitrile, tertiary amines such as N,N-dimethylbenzylamine, N,N-dimethylaniline, N,N-dimethyltoluidine, 2-N-ethylanilinoethanol, tri-n-butylamine, pyridine, quinoline, N-methylmorpholine, triethanolamine, triethylenediamine, tetramethylbutanediamine, and N-methylpiperidine, phenol compounds such as phenol, xylenol, cresol, resorcin, and catechol, organometal salts such as lead naphthenate, lead stearate, zinc naphthenate, zinc octylate, tin oleate, dibutyltin maleate, manganese naphthenate, cobalt naphthenate, and acetylacetone iron, solutions of these organometal salts in hydroxyl group-containing compounds such as phenol, and bisphenol, Inorganic metal salts such as tin chloride, zinc chloride, and aluminum chloride, and organotin compounds such as dioctyltin oxide or other alkyltins, and alkyltin oxides.

### < Epoxy compound (B)>

Any compound containing two or more epoxy groups per molecule may be used as the epoxy compound (B) in the present invention without particular limitation, and conventional epoxy compounds may be used. In the present invention, epoxy compounds having a structure in which a hydrogen atom in a hydroxyl group in compounds containing two or more hydroxyl groups per molecule has been substituted by a glycidyl group are preferred as the epoxy compound (B). Preferably, the epoxy compound (B) contains an aromatic group, and a structure comprising a glycidyl group connected directly to an aromatic group is suitable for use. Such epoxy compounds include compounds having a structure in which a hydrogen atom in a hydroxyl group, for example, in bisphenol A, bisphenol F, bisphenol M, bisphenol P, bisphenol E, phenol novolak resins, cresol novolak resins, cyclopentadiene novolak resins, tetramethyl bisphenol F, bisphenol A novolak resins, brominated bisphenol A, brominated phenol novolak resins, trifunctional phenols, tetrafunctional phenols, naphthalene phenols, biphenyl phenols, phenol aralkyl resins, biphenyl aralkyl resins, naphthol aralkyl resins, dicyclopentadiene aralkyl resins, alicyclic phenols, and phosphorus-containing phenol has been substituted by a glycidyl group, compounds obtained by epoxidizing a double bond, for example, in glycidylamines, glycidyl esters, and butadiene, and compounds obtained by reacting hydroxyl-containing silicon resin compounds with epichlorohydrin or the like. These epoxy compounds may be used either solely or in a proper combination of two or more of them as the epoxy compound (B). The epoxy compound (B) may be in any form of monomers, oligomers, and resins.

The content of the epoxy compound (B) is 25 to 95% by weight, more preferably 30 to 90% by weight, based on the total amount of the resin from the viewpoints of hygroscopic heat resistance and heat resistance.

### < Cyanate compound (C1) >

Any compound containing two or more cyanate groups per molecule may be used as the cyanate compound (C1) in the present invention without particular limitation, and conventional compounds may be used, In the present invention, preferably, the cyanate compound (C1) has a structure In which a hydroxyl group in compounds containing two or more hydroxyl groups per molecule has been substituted by a cyanate group. Preferably, the cyanate compound (C1) contains an aromatic group, and a structure in which the cyanate group is connected directly to the aromatic group is suitable for use. Such cyanate compounds include compounds having a structure in which a hydroxyl group, for example, in bisphenol A, bisphenol F, bisphenol M, bisphenol P, bisphenol E, phenol novolak resins, cresol novolak resins, dicyclopentadiene novolak resins, tetramethyl bisphenol F, bisphenol A novolak resins, brominated bisphenol A, brominated phenol novolak resins, trifunctional phenols, tetrafunctional phenols, naphthalene phenols, biphenyl phenols, phenol aralkyl resins, biphenyl aralkyl resins, naphthol aralkyl resins, dicyclopentadiene aralkyl resins, alicyclic phenols, and phosphorus-containing phenols has been substituted by a cyanate group. These cyanate compounds may be used either solely or in a proper combination of two or more of them as the cyanate compound (C1). The cyanate compound (C1) may be In any form of monomers, oligomers, and resins.

The cyanate compound (C1) may be produced by publicly known methods, for example, by reacting a compound containing two or more hydroxyl groups per molecule with a cyanogen halide or the like.

The content of the cyanate compound (C1), if the resin composition contains cyanate compound (C1), is 10 to 75% by weight, based on the total amount of the resin from the viewpoints of hygroscopic heat resistance and heat resistance.

### < BT resin (C2) >

The BT resin (C2) used in the present Invention means a resin obtained by heat melting and mixing of the cyanate compound (C1) and a maleimide compound in the absence of a solvent or heat mixing after dissolution of the cyanate compound (C1) and the maleimide compound in a suitable organic solvent, and polymerizing the mixture. Organic solvents usable in mixing the cyanate compound (C1) and the maleimide compound Include methyl ethyl ketone, N-methyl pyrrodoline, dimethylformamide, dimethylacetamide, toluene, and xylene.

Any compoundcontaining one or more maleimide groups per molecule may be used without particular limitation as the maleimide compound used in the production of the BT resin (C2). Examples thereof include N-phenylmaleimide, N-hydrophenylmaleimide, bis(4-maleimidophenyl)methane, 2,2-bis{4-(4-maleimidephenoxy)-phenyl}propane, bis(3,5-dimethyl-4-maleimidophenyl)methane, bis(3-ethyl-5-methyl-4-maleimidophenyl)methane, and bis(3,5-diethyl-4-maleimidophenyl)methane. These maleimide compounds may be used either solely or in a proper combination of two or more of them.

The content of the BT resin (C2) is preferably 5 to 75% by weight, more preferably 10 to 70% by weight, based on the total amount of the resin from the viewpoints of hygroscopic heat resistance and heat resistance.

### < Other ingredients >

The resin composition according to the present invention may further comprise (D) a maleimide compound. The above maleimide compounds are suitable as the maleimide compound (D). The content of the maleimide compound (D) is preferably not more than 50% by weight, more preferably not more than 40% by weight from the viewpoint of hygroscopic heat resistance. The total amount of the resin refers to a total weight of the imidazole compound (A), the epoxy compound (B), the cyanate compound (C1) or the BT resin (C2), and the maleimide compound (D).

The resin composition may contain an inorganic filler. The addition of the inorganic filler can Impart low thermal expansion, flame retardance, and laser beam machinability to the resin and, at the same time, can regulate the flowability of the resin in molding prepregs or laminates. Any publicly known inorganic filler may be used as the inorganic filler used in the present invention. Examples thereof include silicas such as naturally occurring silica, fused silica, amorphous silica, fumed silica, and hollow silica, aluminum hydroxide, heat treated products of aluminum hydroxide (products obtained by heat treating aluminum hydroxide to remove a part of water of crystallization), metal hydroxides such as boehmite and magnesium hydroxide, molybdenum compounds such as molybdenum oxide and zinc molybdate, titanium oxide, barium titanate, barium sulfate, zinc borate, zinc stannate, alumina, clay, kaolin, talc, calcined clay, calcined kaolin, calcined talc, mica, short fibers of glass (fine powders of glass such as E glass or D glass), and hollow glass. Among them, aluminum hydroxide, heat treated products of aluminum hydroxide (products obtained by heat treating aluminum hydroxide to remove a part of water of crystallization), metal hydroxides such as boehmite and magnesium hydroxide, and molybdenum compounds such as molybdenum oxide and zinc molybdate are suitable for use from the viewpoint of flame retardance. These Inorganic fillers may be used either solely or in a proper combination of two or more of them.

The content of the inorganic filler is preferably 10 to 600% by weight, more preferably 30 to 500% by weight, based on the total amount of the resin from the viewpoints of a coefficient of linear expansion, and flame retardance.

The resin composition according to the present invention may comprise optional other ingredients in addition to the above ingredients. Various polymer compounds such as other heat curable resins, thermoplastic resins, and oligomers and elastomers thereof, other flame retardant compounds and additives may be added as long as desired properties are not scarified. Any commonly used other ingredients may be used without particular limitation. Examples thereof include phosphorus compounds such as phosphoric esters and melamine phosphate, nitrogen-containing compounds such as melamine and benzoguanamine, oxazine ring-containing compounds, elastomers such as silicone compounds, polyimides, polyvinylacetals, phenoxy resins, acrylic resins, hydroxyl- or carboxyl-containing acrylic resins, alkyd resins, thermoplastic polyurethane resins, polybutadiene, butadiene-acrylonitrile copolymers, polychloroprene, butadiene-styrene copolymers, polyisoprene, butyl rubbers, fluoro-rubbers, and naturally occurring rubbers, vinyl compound polymers such as styrene-isoprene rubbers, acrylic rubbers, and core shell rubbers thereof, epoxidized butadiene, maleinized butadiene, polyethylene, polypropylene, polyethylene-propylene copolymers, poly-4-methylpentene-1, polyvinyl chloride, polyvinylidene chloride, polystyrene, polyvinyl toluene, polyvinyl phenol, AS resins, ABS resins, MBS resins, poly-4-ethylene fluoride, ethylene fluoride-propylene copolymers, 4-ethylene fluoride-6-ethylene fluoride copolymers, and vinylidene fluoride, thermoplastic resins such as polycarbonates, polyester carbonates, polyphenylene ether, polysulfone, polyesters, polyethersulfone, polyamides, polyamide-imide, polyester-imide, and polyphenylene sulfite and low-molecular weight polymers thereof, poly(meth)acrylates such as (meth)acrylate, epoxy(meth)acrylate, di(meth)acryloxy-bisphenol, styrene, vinylpyrrolidone, polyallyl compounds such as diacryl phthalate, divinylbenzene, diallylbenzene, diallyl ether bisphenol, and trialkenyl isocyanurate and prepolymers thereof, dicyclopentadiene and prepolymers thereof, phenol resins, polymerizable double bond-containing monomers such as unsaturated polyeters and prepolymers thereof, and heat curable monomers such as polyisocyantes and prepolymers thereof. Additives include, for example, ultraviolet absorbers, antioxidants, photopolymerization initiators, fluorescent brightener, photosensitizers, dyes, pigments, thickeners, lubricants, antifoaming agents, dispersants, leveling agents, brighteners, and polymerization inhibitors. These additives may be used either solely or In a proper combination of two or more of them according to need.

### < Use of resin composition >

The resin composition according to the present invention is heated for curing. Curing conditions may vary depending upon the composition of the resin composition and the mixing amount of the imidazole compound (A) which is a curing accelerator. When full curing of the resin composition is contemplated, the resin composition is generally heated at a temperature In the range of 100 to 300°C for a predetermined period of time. Heating may be carried out under an applied pressure environment. For example, the resin composition may be cured under an applied pressure of 0.1 to 5 MPa, preferably 0.5 to 3 MPa.

The cured product thus obtained can be utilized in various applications due to its excellent physical properties and workability. Applications suitable for the resin composition according to the present invention include prepregs, printed wiring board materials such as copper-clad laminated sheets, structural materials, and casting resins.

### <Prepreg and laminated sheet>

The prepreg is obtained by Impregnating or coating a base material with the resin composition. Publicly known Inorganic or organic fibrous reinforcing materials used, for example, in various printed wiring board materials may be used as the base material. Examples of inorganic fibrous reinforcing materials include glass fibers such as E-glass, NE-glass, D-glass, S-glass, and T-glass fibers, inorganic fibers such as quartz glass fibers, carbon fibers, alumina fibers, silicon carbide fibers, asbestos, rock wool, slag wool, and gypsum whiskers, woven fabrics or nonwoven fabrics thereof, or mixtures thereof, Examples of organic fibrous reinforcing materials include organic fibers such as wholly aromatic polyamide fibers, polyimide fibers, liquid crystal polyesters, polyester fibers, fluorofibers, polybenzoxazole fibers, cottons, hemps, and semicarbon fibers, woven fabrics or nonwoven fabrics thereof, or mixtures thereof.

The inorganic or organic fibrous reinforcing materials may be used solely or in a proper combination of two or more of them according to need. Examples of such combinations include a combination of glass fibers with wholly aromatic polyamide fibers, a combination of glass fibers with carbon fibers, a combination of glass fibers with polyamide fibers, a combination of glass fibers with mixed woven fabrics such as liquid crystalline aromatic polyesters, inorganic papers such as glass paper, mica paper, or alumina paper, kraft paper, cotton paper, or paper-glass mixed paper, or a combination of two or more of them.

The base material may have been surface-treated to improve adhesion between the base material and the resin. Methods that are publicly known and applicable to prepregs or laminated sheets may be used for the surface treatment. Base materials suitable for thin product applications include polyimide films, wholly aromatic polyamide films, polybenzoxazole films, and liquid crystal polyester films.

The prepreg may be produced by impregnating or coating the base material with the resin composition. For example, the prepreg is produced by impregnating or coating the base material with a resin varnish composed of the resin composition and an organic solvent and then heating the impregnated or coated base material in a drier of 100 to 200°C for 1 to 60 min to semi-cure the resin. The content of the resin composition (containing an inorganic filler) relative to the base material is preferably in the range of 20 to 90% by weight based on the whole prepreg.

A laminated sheet may be formed by providing a single sheet of the prepreg or a stack of a plurality of sheets of the prepreg and performing molding (curing). Specifically, the laminated sheet may be formed by providing a single sheet of the prepreg or a stack of a plurality of sheets of the prepreg, placing a metal foil of copper or aluminum on one surface or both surfaces of the single prepareg or the stack according to need, and subjecting the assembly to molding (curing). Any metal foil used in materials for printed wiring boards may be used as the metal foil without particular limitation. Techniques for conventional laminated sheets for printed wiring boards or multilayered boards may be adopted in the lamination molding. For example, the lamination molding is generally carried out under conditions of the use of a multistage press, a multistage vacuum press, a continuous molding machine, an autoclave molding machine, a vacuum laminator or the like, a temperature of 100 to 300°C, a pressure of 2 to 100kgf/cm², and a heating time of 0.05 to 5 hr. Further, in the present invention, a multilayered board can be formed by lamination molding of a combination of the prepreg with a separately provided wiring board for an internal layer.

### [EXAMPLES]

The present invention is further illustrated by the following Examples and Comparative Examples that are not intended as a limitation of the invention.

### Example 1

2,2-Bis(4-cyanatophenyl)propane (CA200 manufactured by Mitsubishi Gas Chemical Company, Inc.) (25 parts by weight) and 25 parts by weight of bis(3-ethyl-5-methyl-4-maleimidophenyl)methane (BMI-70 manufactured by K.I. Chemical Industry Co., Ltd.) were mixed together, and the mixture was melted at 150°C and was allowed to react with stirring for 6 hr. The reaction product was dissolved in methyl ethyl ketone to obtain a BT resin.

The BT resin (50 parts by weight) (number of parts in terms of solid content) thus obtained, 25 parts by weight of a phenol novolak epoxy resin (N770 manufactured by DIC), 25 parts by weight of a biphenyl aralkyl epoxy resin (NC-3000-FH manufactured by Nippon Kayaku Co., Ltd.), 0.02 part by weight of zinc octylate, and 1 part by weight of 2,4,5-triphenylimidazole (manufactured by Tokyo Chemical Industry Co., Ltd.) were mixed together to prepare a varnish. The varnish was impregnated into a 0.1 mm-thick E glass cloth (E10T manufactured by Unitika Glass Fiber Co., Ltd.), and the impregnated cloth was dried until the gel time became 90 sec at 165°C. Thus, a prepreg having a resin content of 50% by weight was prepared. Two sheets of prepregs were stacked with each other. A 12 µm-thick electrolytic copper foil (JTC-LP foil manufactured by Nippon Mining & Metals Co., Ltd.) was placed on the upper surface and lower surface of the stack, followed by lamination molding at a pressure of 3 MPa under the following three heating conditions to obtain copper-clad laminated sheets having an insulating layer thickness of 0.2 mm.
Heating conditions 1: Held at product temperature of 220°C for 20 min
Heating conditions 2: Held at product temperature of 220°C for 60 min
Heating conditions 3: Held at product temperature of 200°C for 60 min

### Example 2

2,2-Bis(4-cyanatophenyl)propane (CA200 manufactured by Mitsubishi Gas Chemical Company, Inc.) (60 parts by weight) was melted at 150°C, and the melt was allowed to react with stirring for 6 hr. The reaction product was dissolved in methyl ethyl ketone to obtain a prepolymer.

The prepolymer (60 parts by weight) (number of parts in terms of solid content), 40 parts by weight of a cresol novolak epoxy resin (N680 manufactured by DIC), 0.02 part by weight of zinc octylate, and 1 part by weight of 2,4,5- triphenylimidazole (manufactured by Tokyo Chemical Industry Co., Ltd.) were mixed together to prepare a varnish. The varnish was impregnated into a 0.1 mm-thick E glass cloth (E10T manufactured by Unitika Glass Fiber Co., Ltd.), and the impregnated cloth was dried at 170°C for 8 min to prepare a prepreg having a resin content of 50% by weight. Two sheets of prepregs were stacked with each other. A 12 µm-thick electrolytic copper foil (JTC-LP foil manufactured by Nippon Mining & Metals Co., Ltd.) was placed on the upper surface and lower surface of the stack, followed by lamination molding under the same conditions as used in Example 1 to obtain copper-clad laminated sheets having an insulating layer thickness of 0.2 mm.

### Comparative Example 1

A copper-clad laminated sheet having a 0.2 mm-thick insulating layer was obtained in the same manner as in Example 1, except that 2-phenyl-4-methylimidazole (manufactured by Tokyo Chemical Industry Co., Ltd.) was used instead of 2,4,5-triphenylimidazole,

### Comparative Example 2

A copper-clad laminated sheet having a 0.2 mm-thick insulating layer was obtained in the same manner as in Example 1, except that 2,4,5-triphenylimidazole was not used.

### Comparative Example 3

A copper-clad laminated sheet having a 0.2 mm-thick insulating layer was obtained in the same manner as in Example 2, except that 2-phenyl-4-methylimidazole (manufactured by Tokyo Chemical Industry Co., Ltd.) was used instead of 2,4,5-triphenylimidazole.

### Comparative Example 4

A copper-clad laminated sheet having a 0.2 mm-thick insulating layer was obtained in the same manner as in Example 2, except that 2,4,5-triphenylimidazole was not used.

### Evaluation test

For the prepregs and laminated sheets thus obtained, the measurement of prepreg gelation time, the measurement of glass transition temperature, and the evaluation of hygroscopic heat resistance were carried out as follows.

### (1) Prepreg gelation time

The prepregs were allowed to stand for 0, 5, 10, 15, and 30 days under a constant-temperature environment of 40°C, and the gelation time was measured according to Curing Time Measurement specified in JIS (Japanese Industrial Standards) C 6521 (Testing method for prepregs for multilayered printed wiring boards) (see 5.7 of JIS C 6521).

### (2) Glass transition temperature

A sample having a size of 10 mm x 60 mm was prepared, and the glass transition temperature was measured with a DMA apparatus (TA Instrument; model 2980) at a temperature rise rate of 10°C/min according to B in a DMA method specified in JIS C 6481 (Testing method for copper-clad laminated sheets for printed wiring boards) (see 5.17.2 in JIS C 6481).

**[Table 1]**

| Resin composition | | | Example | | Comparative Example | | | |
|---|---|---|---|---|---|---|---|---|
| | | | 1 | 2 | 1 | 2 | 3 | 4 |
| Imidazole compound | 2,4,5-Triphenylimidazole | | 1 | 1 | | | | |
| | 2-Phenyl-4-methylimidazole | | | | 1 | | 1 | |
| Epoxy resin | N770 | | 25 | | 25 | 25 | | |
| | NC-3000-FH | | 25 | | 25 | 25 | | |
| | N680 | | | 40 | | | 40 | 40 |
| Cyanate resin | CA200 | | | 60 | | | 60 | 60 |
| BT resin | | | 50 | | 50 | 50 | | |
| zinc octylate | | | 0.02 | 0.02 | 0.02 | 0.02 | 0.02 | 0.02 |
| Evaluation | Drying time (min) | | 3 | 4 | 3 | 15 | 4 | 10 |
| | Gelation time (sec) | After elapse of 0 day | 90 | 120 | 90 | 90 | 120 | 120 |
| | | After elapse of 5 days | 57 | 83 | 40 | 72 | 45 | 117 |
| | | After elapse of 10 days | 43 | 60 | 25 | 68 | 20 | 104 |
| | | After elapse of 15 days | 38 | 35 | 18 | 63 | 10 | 100 |
| | | After elapse of 30 days | 34 | 27 | 14 | 55 | 7 | 90 |
| | Glass transition temp. (°C) | 220 x 60 min | 295 | 305 | 295 | 275 | 305 | 305 |
| | | 220 x 20 min | 280 | 305 | 275 | 220 | 300 | 295 |
| | | 200 x 60 min | 275 | 295 | 275 | 250 | 290 | 285 |

As is also apparent from Table 1, for laminated sheets using resin compositions containing 2-phenyl-4-methylimidazole that is an imidazole compound other than the imidazole compounds represented by formula (I) (Comparative Examples 1 and 3), the curing time of the prepregs is short, but on the other hand, a change in gelation time of the prepregs with the elapse of time is significant. For laminated sheets using resin compositions free from an Imidazole compound which is a curing accelerator (Comparative Examples 2 and 4), a change in gelation time of the prepregs with the elapse of time is not significant, but on the other hand, the curing time of the prepregs is long. By contrast, for laminated sheets using resin compositions containing 2,4,5-triphenylimidazole that is an imidazole compound represented by formula (I) (Examples 1 and 2), the curing time of the prepregs is short and, at the same time, a change In gelation time of the prepregs with the elapse of time is not significant.

## Claims

1. A resin composition comprising:
an imidazole compound (A) represented by formula (I);
an epoxy compound (B); and
a cyanate compound (C1) which is contained in the resin composition in an amount of 10 to 75% by weight based on the total amount of the resin, if the resin composition contains cyanate compound (C1), or a BT resin (C2): 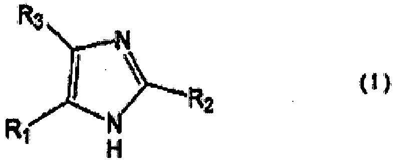 wherein
R¹ and R² each independently represent an alkyl group having 3 to 18 carbon atoms, an alkenyl group having 3 to 18 carbon atoms, an alkoxyl group having 3 to 18 carbon atoms, or a substituted or unsubstituted aromatic substituent having 6 to 14 carbon atoms;
R³ represents an alkyl group having 1 to 18 carbon atoms, an alkenyl group having 2 to 18 carbon atoms, an alkoxy group having 1 to 18 carbon atoms, a substituted or unsubstituted aromatic substituent having 6 to 14 carbon atoms, or a halogen group.

2. The resin composition according to claim 1, wherein R¹ and R² in formula (I) each independently represent an isopropyl, t-butyl, isopropylalkoxyl, t-butylalkoxyl, phenyl, or naphthyl group.

3. The resin composition according to claim 2, wherein R¹ and R² in formula (I) each represent a phenyl group.

4. The resin composition according to any one of claims 1 to 3, which contains the imidazole compound (A) in an amount of 0.1 to 10% by weight based on the total amount of the resins.

5. The resin composition according to any one of claims 1 to 4, which contains the epoxy compound (B) in an amount of 25 to 95% by weight based on the total amount of the resins.

6. The resin composition according to any one of claims 1 to 5, which contains the BT resin (C2) in an amount of 5 to 75% by weight based on the total amount of the resins.

7. A prepreg comprising: a base material; and a resin composition according to any one of claims 1 to 6 impregnated into or coated on the base material.

8. A laminated sheet comprising a lamination-molded product of a prepreg according to claim 7.

9. A metal foil-clad laminated sheet comprising a lamination molded product of a prepreg according to claim 7 and a metal foil.

10. A structural material produced from a resin composition according to any one of claims 1 to 6.

11. A casting resin comprising a resin composition according to any one of claims 1 to 6.

## Patentansprüche

1. Harzzusammensetzung, umfassend:
eine Imidazolverbindung (A), dargestellt durch die Formel (I);
eine Epoxidverbindung (B); und
eine Cyanatverbindung (C1), die in der Harzzusammensetzung in einer Menge von 10 bis 75 Gew.-% enthalten ist, bezogen auf die Gesamtmenge des Harzes, falls die Harzzusammensetzung die Cyanatverbindung (C1) enthält, oder ein BT-Harz (C2): 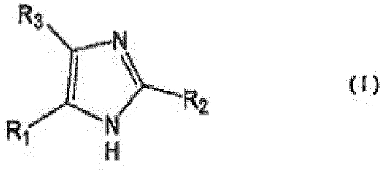
wobei R¹ und R² jeweils unabhängig voneinander für eine Alkylgruppe mit 3 bis 18 Kohlenstoffatomen, eine Alkenylgruppe mit 3 bis 18 Kohlenstoffatomen, eine Alkoxygruppe mit 3 bis 18 Kohlenstoffatomen oder einen substituierten oder unsubstituierten aromatischen Substituenten mit 6 bis 14 Kohlenstoffatomen stehen;
R³ für eine Alkylgruppe mit 1 bis 18 Kohlenstoffatomen, eine Alkenylgruppe mit 2 bis 18 Kohlenstoffatomen, eine Alkoxygruppe mit 1 bis 18 Kohlenstoffatomen, einen substituierten oder unsubstituierten aromatischen Substituenten mit 6 bis 14 Kohlenstoffatomen oder eine Halogengruppe steht,

2. Harzzusammensetzung gemäß Anspruch 1, wobei R¹ und R² in Formel (I) jeweils unabhängig voneinander für eine Isopropyl-, t-Butyl-, Isopropylalkoxy-, t-Butylalkoxy-, Phenyl- oder Naphthylgruppe stehen.

3. Harzzusammensetzung gemäß Anspruch 2, wobei R¹ und R² in Formel (I) jeweils für eine Phenylgruppe stehen.

4. Harzzusammensetzung gemäß einem der Ansprüche 1 bis 3, die die Imidazolverbindung (A) in einer Menge von 0,1 bis 10 Gew.-%, bezogen auf die Gesamtmenge der Harze, enthält.

5. Harzzusammensetzung gemäß einem der Ansprüche 1 bis 4, die die Epoxidverbindung (B) in einer Menge von 25 bis 95 Gew.-%, bezogen auf die Gesamtmenge der Harze, enthält.

6. Harzzusammensetzung gemäß einem der Ansprüche 1 bis 5, die das BT-Harz (C2) in einer Menge von 5 bis 75 Gew.-%, bezogen auf die Gesamtmenge der Harze, enthält.

7. Prepreg, umfassend: ein Basismaterial; und eine Harzzusammensetzung gemäß einem der Ansprüche 1 bis 6, mit der das Basismaterial imprägniert oder beschichtet ist.

8. Laminatfolie, umfassend ein durch Laminieren geformtes Produkt eines Prepregs gemäß Anspruch 7.

9. Metallfolienkaschierte Laminatfolie, umfassend ein durch Laminieren geformtes Produkt eines Prepregs gemäß Anspruch 7 und eine Metallfolie.

10. Strukturmaterial, hergestellt aus einer Harzzusammensetzung gemäß einem der Ansprüche 1 bis 6.

11. Gießharz, umfassend eine Harzzusammensetzung gemäß einem der Ansprüche 1 bis 6.

## Revendications

1. Composition de résine comprenant :
un composé d'imidazole (A) représenté par la formule (I) ;
un composé époxy (B) ; et
un composé de cyanate (C1) qui est contenu dans la composition de résine en une quantité de 10 à 75 % en poids, sur la base de la quantité totale de la résine, lorsque la composition de résine contient le composé de cyanate (C1), ou une résine BT (C2) : 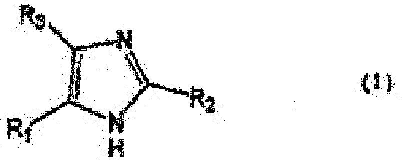 dans laquelle
R¹ et R² représentent, chacun de manière indépendante, un groupe alkyle contenant de 3 à 18 atomes de carbone, un groupe alcényle contenant de 3 à 18 atomes de carbone, un groupe alcoxyle contenant de 3 à 18 atomes de carbone, ou un substituant aromatique substitué ou non substitué contenant de 6 à 14 atomes de carbone ;
R³ représente un groupe alkyle contenant de 1 à 18 atomes de carbone, un groupe alcényle contenant de 2 à 18 atomes de carbone, un groupe alcoxyle contenant de 1 à 18 atomes de carbone, un substituant aromatique substitué ou non substitué contenant de 6 à 14 atomes de carbone, ou un groupe halogéno.

2. Composition de résine selon la revendication 1, dans laquelle R¹ et R² dans la formule (I) représentent, chacun de manière indépendante, un groupe isopropyle, tert-butyle, isopropylalcoxyle, tert-butylalcoxyle, phényle ou naphtyle.

3. Composition de résine selon la revendication 2, dans laquelle R¹ et R² dans la formule (I) représentent chacun un groupe phényle.

4. Composition de résine selon l'une quelconque des revendications 1 à 3, qui contient le composé d'imidazole (A) en une quantité de 0,1 à 10 % en poids, sur la base de la quantité totale des résines.

5. Composition de résine selon l'une quelconque des revendications 1 à 4, qui contient le composé époxy (B) en une quantité de 25 à 95 % en poids, sur la base de la quantité totale des résines.

6. Composition de résine selon l'une quelconque des revendications 1 à 5, qui contient la résine BT (C2) en une quantité de 5 à 75 % en poids, sur la base de la quantité totale des résines.

7. Préimprégné comprenant : une matière de base ; et une composition de résine selon l'une quelconque des revendications 1 à 6, imprégnée dans ou enduite sur la matière de base.

8. Feuille stratifiée comprenant un produit moulé de stratification d'un préimprégné selon la revendication 7.

9. Feuille stratifiée plaquée d'un film métallique comprenant un produit moulé par stratification d'un préimprégné selon la revendication 7 et un film métallique.

10. Matériau structurel obtenu à partir d'une composition de résine selon l'une quelconque des revendications 1 à 6.

11. Résine de moulage comprenant une composition de résine selon l'une quelconque des revendications 1 à 6.
